# FASCICULE DE BREVET EUROPEEN

(11) **EP 0 497 701 B1**
(45) Date de publication et mention de la délivrance du brevet: **24.08.1994**
(21) Numéro de dépôt: 92400246.2
(22) Date de dépôt: 30.01.1992
(51) Int. Cl.: B29C 67/18, B29C 33/00

(54) **Procédé de realisation d'une articulation elastique, noyau utilisable dans ce procédé et articulation obtenue**
Verfahren zur Herstellung eines elastischen Gelenkes, Kern für die Durchführung des Verfahrens und hergestelltes Gelenk
Process of manufacturing a flexible joint, core used therein, and joint obtained by this process

(30) Priorité: 01.02.1991 FR 9101133
(43) Date de publication de la demande: 05.08.1992
(73) Titulaire: AUTOMOBILES PEUGEOT, 75116 Paris (FR); AUTOMOBILES CITROEN, 92200 Neuilly-sur-Seine (FR)
(72) Inventeur: Bailleux, François, F-91400 Le Val d'Albian (FR)
(74) Mandataire: Robert, Jean-François

(56) Documents cités:
- EP-A- 0 189 934
- DE-A- 1 939 955
- FR-A- 2 564 785
- PATENT ABSTRACTS OF JAPAN vol. 13, no. 274 (M-841)(3622) 23 Juin 1989 & JP-A-1 071 718 (HITACHI METALS LTD) 16 Mars 1989

## Description

L'invention a pour objet un procédé de réalisation d'une articulation élastique telle que celles qui sont utilisées dans l'industrie automobile, par exemple pour relier un bras de suspension de roue à la caisse du véhicule comme cela est décrit dans FR-A-2 564 785 par exemple.

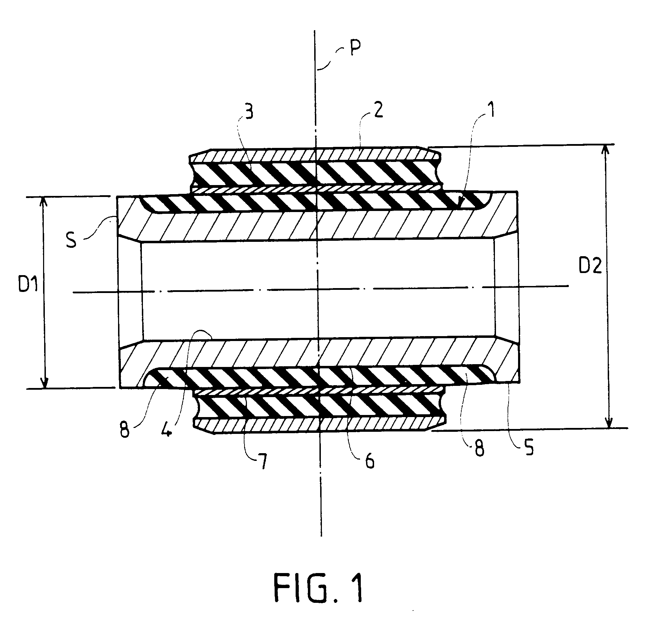

La figure 1 représente en coupe longitudinale une articulation de ce type. On voit qu'elle se compose essentiellement d'un tube intérieur 1, de forme générale cylindrique, entouré d'un tube extérieur 2 qui lui est concentrique. Une masse de matériau élastomère 3 tel que du caoutchouc est interposée entre ces deux tubes et adhérisée à ceux-ci. Cette articulation est solidaire de l'une des deux pièces à relier par l'intermédiaire du tube extérieur 2 et elle est fixée sur l'autre pièce par une vis ou un boulon (non représenté) qui traverse un passage longitudinal 4 prévu dans le tube intérieur 1.

Une telle articulation exerce essentiellement trois fonctions:
- lier les deux pièces l'une à l'autre, par exemple à l'aide d'un boulon comme indiqué ci-dessus;
- permettre certains mouvements de rotation et translation relative entre les deux pièces; et
- assurer un filtrage entre les deux pièces.

Pour optimiser ces différentes fonctions, il faut trouver un compromis entre plusieurs actions contradictoires. D'une part, on cherche à augmenter le diamètre extérieur D1 du tube 1 afin d'augmenter la surface S d'appui de la tête du boulon pour diminuer la pression superficielle lors du serrage de celui-ci. Ceci tend à diminuer le volume de caoutchouc car on ne peut trop augmenter le diamètre extérieur D2 de l'articulation (diamètre du tube extérieur 2): celui-ci est limité soit pour des raisons d'encombrement à ce niveau du véhicule, soit parce qu'on ne veut pas modifier les machines existantes, etc...

C'est pourquoi on prévoit aux extrémités du tube 1 des collerettes 5 afin de ménager, sur la face externe du tube 1, un espace 6 apte à être rempli de caoutchouc. Dans la plupart des cas, les collerettes 5 font partie intégrante du tube 1.

De plus, il peut être nécessaire dans certains cas, pour obtenir un bon rapport entre les rigidités axiale et radiale, de prévoir un tube intermédiaire 7 concentrique aux deux autres et noyé dans la masse de caoutchouc.

A l'heure actuelle, de telles articulations sont réalisées par moulage dans un moule dont le plan de joint P est perpendiculaire à l'axe de l'articulation. On comprend donc que, pour permettre le démoulage, on soit obligé de mettre du caoutchouc dans les zones 8 situées aux extrémités du tube 1, sur la face externe de celui-ci, au voisinage des collerettes 5. Or, la présence de caoutchouc dans ces zones est non seulement inutile, mais gênante car cela augmente la rigidité axiale. De plus, le caoutchouc présent dans les zones 8 est fortement sollicité en cisaillement et en compression: il se détruit rapidement et cette détérioration risque de se transmettre au reste de la masse de caoutchouc.

Or, il est difficilement envisageable de changer le plan de joint du moule. En effet, le caoutchouc est injecté à chaud et sous pression et il faut l'empêcher de s'écouler dans les zones où il ne doit absolument pas y en avoir, c'est-à-dire essentiellement la surface S, le passage 4 et la tranche des tubes 2 et 7. Le seul moyen d'empêcher cet écoulement est d'exercer une forte pression sur la surface S et la tranche des tubes 2 et 7,ce qui impose que les deux parties du moule s'appliquent sur les extrémités de l'articulation et, donc, soient déplacées perpendiculairement au plan P.

L'invention a pour but d'éliminer ces inconvénients grâce à un procédé qui évite d'avoir du caoutchouc dans les zones où il est indésirable tout en permettant d'utiliser les moules actuels.

Ce procédé, servant à la réalisation d'une articulation élastique comprenant:
- un tube intérieur présentant une collerette à l'une au moins de ses extrémités;
- un tube extérieur entourant le tube intérieur; et
- une masse de matériau élastomère disposée entre ces deux tubes et adhérisée à ceux-ci,
et dans lequel le matériau élastomère est mis en place par coulée dans un moule dont le plan de joint est perpendiculaire à l'axe des tubes, se caractérise en ce qu'on place un noyau au voisinage de ladite collerette avant la coulée du matériau élastomère de manière à empêcher celui-ci d'arriver au contact de la collerette, ce noyau étant éliminé ou extrait après moulage.

De préférence, l'extraction du noyau est effectuée avant refroidissement complet du matériau élastomère.

Quant au noyau, qui est de préférence en matière plastique, il comprend, dans un premier mode de réalisation, au moins une bague fendue longitudinalement, l'extraction se faisant par écartement des bords de la fente. Dans ce cas, la face interne de la bague a une forme complémentaire de celle désirée pour le matériau élastomère à cet endroit.

Si l'articulation comprend un tube intermédiaire noyé dans la masse de matériau élastomère, le noyau peut comporter une partie cylindrique destinée à constituer ce tube intermédiaire, celui-ci étant séparé du reste du noyau après moulage. Cette séparation peut se faire par rupture au niveau de la zone de jonction entre ladite partie cylindrique et le reste du noyau.

Toujours dans le cas d'une articulation comprenant un tube intermédiaire noyé dans la masse de matériau élastomère, le noyau peut se présenter sous la forme d'au moins une bague fendue longitudinalement solidaire d'une partie cylindrique ayant le même axe longitudinal qu'elle et destinée à constituer ledit tube intermédiaire.

L'invention a également pour objet un noyau pour la mise en oeuvre de ce procédé.

Selon la principale caractéristique de ce noyau, celui-ci comporte au moins une bague fendue longitudinalement telle que définie ci-dessus, l'une des faces de cette bague pouvant présenter au moins un renflement annulaire. Dans une réalisation particulière, cette bague est solidaire d'une partie cylindrique ayant le même axe qu'elle.

L'invention a encore pour objet une articulation élastique obtenue par ce procédé. Celle-ci, du type défini ci-dessus, la collerette faisant partie intégrante du tube intérieur, se caractérise en ce que la zone du tube intérieur jouxtant la collerette est dépourvue de matériau élastomère.

L'invention apparaîtra mieux à la lecture de la description qui va suivre, donnée uniquement à titre d'exemple, en référence aux dessins annexés, dans lesquels:
- la Figure 1 est une vue schématique en coupe longitudinale d'une articulation élastique selon l'art antérieur;
- la Figure 2 est une vue semblable à la figure 1 illustrant la mise en oeuvre du procédé objet de l'invention; et
- la Figure 3 est une vue schématique en perspective d'une bague fendue utilisée comme noyau dans le procédé objet de l'invention.

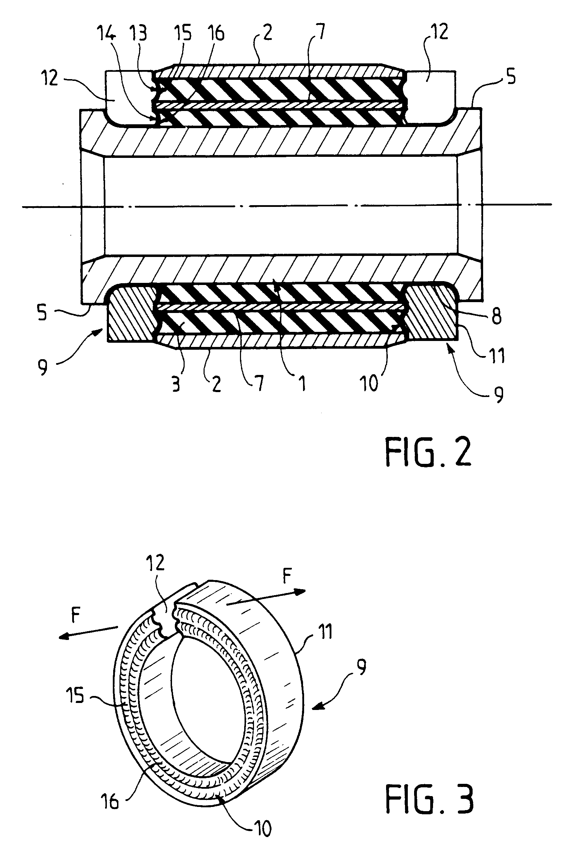

La figure 2 illustre la mise en oeuvre du procédé objet de l'invention. Pour cela, on place d'abord dans le moule (non représenté) le tube intérieur 1 et le tube extérieur 2 concentriquement au premier avec interposition éventuelle du tube intermédiaire 7. Selon l'invention, avant de couler le caoutchouc, on place aux extrémités du tube 1, c'est-à-dire dans les zones 8, deux noyaux qui, dans cet exemple, se présentent sous la forme de deux bagues 9 fendues longitudinalement.

La figure 3 montre en perspective une telle bague. Celle-ci, qui est de préférence en matière plastique, se présente sous la forme d'une portion de cylindre limitée par deux faces généralement planes 10 et 11 sensiblement perpendiculaires à son axe, cet axe coïncidant avec celui de l'articulation lorsque la bague est montée dans une zone 8.

Chaque bague présente une fente longitudinale 12 qui permet sa mise en place sur le tube 1 et son extraction en exerçant sur les bords de la fente une force F. De plus, cette fente peut être utilisée comme orifice d'introduction du caoutchouc lors de l'injection.

Une fois les bagues 9 en place sur le tube 1, on coule le caoutchouc et on le laisse solidifier. Les bagues sont extraites de préférence avant refroidissement complet car le plastique se déforme plus facilement à chaud et cela peut permettre de gagner du temps.

Ainsi, grâce à la présence des noyaux 9, le caoutchouc n'a pas pu pénétrer dans les zones 8.

De préférence, la face interne des bagues a une forme complémentaire de celle désirée pour le caoutchouc à cet endroit. Dans la présente description, on appellera "face interne" d'une bague celle des deux faces 10 et 11 qui est tournée vers le centre de l'articulation (en l'occurrence la face 10) et "face externe" celle qui est tournée vers la collerette 5.

Dans l'exemple illustré à la figure 2, le caoutchouc présente deux surfaces concaves 13 et 14, l'une 13 entre le tube extérieur 2 et le tube intermédiaire 7 et l'autre 14 entre le tube intermédiaire 7 et le tube intérieur 1. La face interne 10 de la bague 9 présente deux renflements circulaires 15 et 16 dont la forme correspond à celle des surfaces 13 et 14 respectivement.

Il est à noter que la forme des bagues 9 leur permet de maintenir les tubes 2 et 7 avant la coulée du caoutchouc, les extrémités du tube 7 étant maintenues dans l'espace entre les renflements 15 et 16.

Si le tube intermédiaire 7 est réalisé dans le même matériau que les bagues 9 (notamment s'il est en matière plastique), on peut réaliser le tube 7 et les bagues 9 de sorte qu'ils ne forment qu'une seule pièce. La séparation après moulage se fera par rupture au niveau de la zone de jonction entre le tube et les bagues lorsqu' on écartera celles-ci. Eventuellement, on peut prévoir des amorces de rupture dans cette zone.

Le procédé objet de l'invention présente des avantages particulièrement intéressants dont le principal est d'éviter la présence du matériau élastomère dans les zones 8, ce qui facilite l'obtention d'une faible raideur axiale et augmente la durée de vie du caoutchouc. De plus, il est économique grâce à la facilité de sa mise en oeuvre qui peut se faire sans modification notable des moules existants. En effet, il suffit de les usiner pour les adapter aux dimensions des bagues 9. Enfin, ces dernières sont peu coûteuses à réaliser et elles peuvent être utilisées plusieurs fois.

Il est bien entendu que l'invention ne se limite pas au seul mode de réalisation décrit et représenté mais qu'on peut imaginer de nombreuses variantes sans sortir du cadre de l'invention. C'est ainsi que l'homme du métier pourra faire varier, en fonction de chaque application particulière, la forme et les dimensions du noyau, ainsi que son matériau constitutif.

## Revendications

1. Procédé de réalisation d'une articulation élastique comprenant:
- un tube intérieur (1) présentant une collerette (5) à l'une au moins de ses extrémités;
- un tube extérieur (2) entourant le tube intérieur (1); et
- une masse de matériau élastomère (3) disposée entre ces deux tubes et adhérisée à ceux-ci,
dans lequel le matériau élastomère (3) est mis en place par coulée dans un moule dont le plan de joint (P) est perpendiculaire à l'axe des tubes (1,2),
caractérisé en ce qu'on place un noyau (9) au voisinage de ladite collerette (5) avant la coulée du matériau élastomère (3) de manière à empêcher celui-ci d'arriver au contact de la collerette (5), ce noyau (9) étant éliminé ou extrait après moulage.

2. Procédé selon la revendication 1, caractérisé en ce que l'extraction du noyau (9) est effectuée avant refroidissement complet du matériau élastomère (3).

3. Procédé selon l'une quelconque des revendications 1 et 2, caractérisé en ce que le noyau (9) est en matière plastique.

4. Procédé selon l'une quelconque des revendications 1 à 3, caractérisé en ce que le noyau comprend au moins une bague (9) fendue longitudinalement, l'extraction se faisant par écartement des bords de la fente (12).

5. Procédé selon la revendication 4, caractérisé en ce que la face interne (10) de la bague a une forme complémentaire de celle désirée pour le matériau élastomère (3) à cet endroit.

6. Procédé selon l'une quelconque des revendications 1 à 5, caractérisé en ce que, l'articulation comprenant un tube intermédiaire (7) noyé dans la masse de matériau élastomère (3), le noyau (9) comprend une partie cylindrique destinée à constituer ce tube intermédiaire, celui-ci étant séparé du reste du noyau après moulage.

7. Procédé selon la revendication 6, caractérisé en ce que la séparation se fait par rupture au niveau de la zone de jonction entre ladite partie cylindrique et le reste du noyau (9).

8. Procédé selon les revendications 4 et 6, caractérisé en ce que le noyau se présente sous la forme d'au moins une bague (9) fendue longitudinalement solidaire d'une partie cylindrique ayant le même axe longitudinal qu'elle et constituant ledit tube intermédiaire (7).

9. Noyau pour la mise en oeuvre du procédé selon l'une quelconque des revendications 1 à 8, caractérisé en ce qu' il comprend au moins une bague (9) fendue longitudinalement.

10. Noyau selon la revendication 9, caractérisé en ce que l'une (10) des faces de la bague présente au moins un renflement annulaire (15,16).

11. Noyau selon l'une quelconque des revendications 9 et 10, caractérisé en ce que ladite bague (9) est solidaire d'une partie cylindrique ayant le même axe qu'elle.

12. Articulation élastique obtenue par le procédé selon l'une quelconque des revendications 1 à 8, comprenant un tube intérieur (1) ayant à l'une au moins de ses extrémités une collerette (5) qui en fait partie intégrante, un tube extérieur (2) entourant le premier, et une masse de matériau élastomère (3) interposée entre ces deux tubes et adhérisée à ceux-ci, caractérisée en ce que la zone (8) du tube intérieur (1) jouxtant la collerette (5) est dépourvue de matériau élastomère.

## Claims

1. A process for producing a resilient joint comprising:
- an inner tube (1) having a flange (5) at at least one of its ends;
- an outer tube (2) surrounding the inner tube (1); and
- a mass of elastomeric material (3) arranged between these two tubes and bonded thereto,
in which the elastomeric material (3) is positioned by casting in a mould, the parting plane (P) of which is perpendicular to the axis of the tubes (1, 2),
characterised in that a core (9) is placed in the vicinity of said flange (5) before the casting of the elastomeric material (3) so as to prevent the latter from coming into contact with the flange (5), this core (9) being removed or extracted after moulding.

2. A process according to Claim 1, characterised in that the extraction of the core (9) is carried out before the elastomeric material (3) has cooled completely.

3. A process according to any one of Claims 1 and 2, characterised in that the core (9) is made of plastic material.

4. A process according to any one of Claims 1 to 3, characterised in that the core comprises at least one ring (9) split longitudinally, the extraction taking place by moving apart the edges of the split (12).

5. A process according to Claim 4, characterised in that the inner face (10) of the ring has a shape complementary to that desired for the elastomeric material (3) at that place.

6. A process according to any one of Claims 1 to 5, characterised in that, when the joint comprises an intermediate tube (7) embedded in the mass of elastomeric material (3), the core (9) comprises a cylindrical portion intended to constitute this intermediate tube, the latter being separated from the rest of the core after moulding.

7. A process according to Claim 6, characterised in that separation takes place by rupture in the area of the zone of junction between said cylindrical portion and the rest of the core (9).

8. A process according to Claims 4 and 6, characterised in that the core takes the form of at least one ring (9) split longitudinally, integral with a cylindrical portion having the same longitudinal axis as it and constituting said intermediate tube (7).

9. A core for implementing the process according to any one of Claims 1 to 8, characterised in that it comprises at least one ring (9) split longitudinally.

10. A core according to Claim 9, characterised in that one (10) of the faces of the ring has at least one annular swelling (15, 16).

11. A core according to any one of Claims 9 and 10, characterised in that said ring (9) is integral with a cylindrical portion having the same axis as it.

12. A resilient joint produced by the process according to any one of Claims 1 to 8, comprising an inner tube (1) having at at least one of its ends a flange (5) which forms an integral part thereof, an outer tube (2) surrounding the former, and a mass of elastomeric material (3) interposed between these two tubes and bonded thereto, characterised in that the zone (8) of the inner tube (1) adjoining the flange (5) is devoid of elastomeric material.

## Patentansprüche

1. Verfahren zur Herstellung eines elastischen Gelenks mit
- einem Innenrohr (1), das an mindestens einem seiner Enden einen Bund (5) aufweist;
- einem das Innenrohr (1) umgebenden Außenrohr (2); und
- einer Masse aus Elastomermaterial (3), die zwischen diesen beiden Rohren angeordnet ist und an ihnen haftet,
bei welchem das Elastomermaterial (3) durch Gießen in eine Form eingebracht wird, deren Teilungsebene (P) senkrecht zur Achse der Rohre (1,2) verläuft,
dadurch gekennzeichnet, daß vor dem Gießen des Elastomermaterials (3) ein Kern (9) in der Nähe des Bundes (5) angeordnet wird, um zu verhindern, daß das Elastomermaterial mit dem Bund (5) in Berührung kommt, wobei der Kern (9) nach dem Formgießen entfernt oder herausgenommen wird.

2. Verfahren nach Anspruch 1, dadurch gekennzeichnet, daß das Herausnehmen des Kerns (9) vor dem vollständigen Erkalten des Elastomermaterials (3) erfolgt.

3. Verfahren nach einem der Ansprüche 1 und 2, dadurch gekennzeichnet, daß der Kern (9) aus Kunststoff besteht.

4. Verfahren nach einem der Ansprüche 1 und 3, dadurch gekennzeichnet, der Kern mindestens einen längs geschlitzten Ring (9) aufweist, wobei das Herausnehmen durch Auseinanderziehen der Ränder des Spalts (12) erfolgt.

5. Verfahren nach Anspruch 4, dadurch gekennzeichnet, daß die Innenseite (10) des Rings eine zu der an dieser Stelle für das Elastomermaterial (3) gewünschten Form komplementäre Form aufweist.

6. Verfahren nach einem der Ansprüche 1 bis 5, dadurch gekennzeichnet, daß, da das Gelenk ein Zwischenrohr (7) aufweist, das in der Elastomermasse (3) eingebettet ist, der Kern (9) einen zylindrischen Teil zur Bildung dieses Zwischenrohrs aufweist, wobei dieses Rohr nach dem Gießen vom übrigen Teil des Kerns getrennt wird.

7. Verfahren nach Anspruch 6, dadurch gekennzeichnet, daß die Trennung durch Bruch in Höhe des Verbindungsbereich zwischen dem zylindrischen Teil und dem übrigen Teil des Kerns (9) erfolgt.

8. Verfahren nach den Ansprüchen 4 und 6, dadurch gekennzeichnet, daß der Kern die Form mindestens eines längs geschlitzten Rings (9) aufweist, der mit einem zylindrischen Teil fest verbunden ist, der in der gleichen Längsachse wie der Ring liegt und das Zwischenrohr (7) bildet.

9. Kern zur Durchführung des Verfahrens nach einem der Ansprüche 1 bis 8, dadurch gekennzeichnet, daß er mindestens einen längs geschlitzten Ring (9) aufweist.

10. Kern nach Anspruch 9, dadurch gekennzeichnet, daß eine (10) der Flächen des Rings mindestens eine ringförmige Wulst (15, 16) aufweist.

11. Kern nach einem der Ansprüche 9 und 10, dadurch gekennzeichnet, daß der Ring (9) mit einem zylindrischen Teil fest verbunden ist, der die gleiche Achse aufweist wie er.

12. Elastisches Gelenk erhalten nach dem Verfahren nach einem der Ansprüche 1 bis 8, mit einem Innenrohr (1), das mindestens an einem seiner Enden einen integrierten Bund (5) aufweist, einem das Innenrohr umgebenden Außenrohr (2), einer Masse Elastomermaterial (3), die zwischen diesen beiden Rohren angeordnet ist und mit ihnen haftet, dadurch gekennzeichnet, daß der Bereich (8) des Innenrohrs (1), der an dem Bund (5) anschließt, kein Elastomermaterial aufweist.
